# EUROPÄISCHE PATENTSCHRIFT

(11) **EP 2 010 403 B1**
(45) Veröffentlichungstag und Bekanntmachung des Hinweises auf die Patenterteilung: **24.06.2009**
(21) Anmeldenummer: 07726563.5
(22) Anmeldetag: 01.03.2007
(51) Int. Cl.: B60G 15/12, B60G 17/048, B60G 17/052, F16F 9/04

(54) **TEMPERATURGEREGELTE LUFTFEDER- UND DÄMPFEREINHEIT**
TEMPERATURE-CONTROLLED AIR SPRING AND DAMPER UNIT
ENSEMBLE SUSPENSION PNEUMATIQUE ET AMORTISSEUR REGLABLE EN FONCTION DE LA TEMPERATURE

(30) Priorität: 15.04.2006 DE 102006017715
(43) Veröffentlichungstag der Anmeldung: 07.01.2009
(73) Patentinhaber: Continental Aktiengesellschaft, 30165 Hannover (DE)
(72) Erfinder: GLEU, Jens-Uwe, 30855 Langenhagen (DE); SCHALLMEIER, Christian, 31535 Neustadt (DE)
(74) Vertreter: Finger, Karsten
(86) Internationale Anmeldenummer: PCT/EP2007/051927
(87) Internationale Veröffentlichungsnummer: WO 2007/118731

(56) Entgegenhaltungen:
- WO-A-20/06107080
- DE-A1- 2 406 835
- DE-A1- 3 012 786
- DE-B3- 10 311 263

## Beschreibung

Die Erfindung betrifft Luftfeder- und Dämpfereinheit für Fahrzeuge, wobei die Luftfeder- und Dämpfereinheit mindestens zwei mit Druckluft gefüllte Arbeitsräume aufweist, wobei die Arbeitsräume jeweils mindestens teilweise durch Rollbälge begrenzt werden und die Rollbälge unter Bildung einer Rollfalte mindestens teilweise auf Abrollkonturen vorgegebener und als Zylinderflächen ausgebildeter Gehäuseteile abrollen und wobei die Arbeitsräume untereinander über durchströmbare Drosselventile verbunden sind. Dabei ist die Luftfeder- und Dämpfereinheit üblicherweise zwischen Karosserie und Fahrwerk angeordnet.

Solche Luftfeder- und Dämpfereinheit in Kraftfahrzeugen sind bekannt. Luftfeder- und Dämpfereinheiten dienen z. B. in Personenkraftwagen als besonders komfortable Federungselemente und sorgen für ein angenehmes Fahrgefühl bei einer Federung, die je nach Straßenverhältnissen zwischen einem "weichen" und "harten" Federungsverhalten angepasst werden kann. Dies geschieht in der Regel durch verstellbare / steuerbare Ventile im Strömungsweg zwischen den einzelnen Arbeitsräumen, wodurch die Dämpfung beeinflusst bzw. verändert wird, die durch die dissipative Strömungen zwischen den einzelnen Arbeitsräumen entsteht.

Luftfeder- und Dämpfereinheiten sind heutzutage üblicherweise mit elektronischen Regelungen versehen bzw. in eine elektronische Fahrzeugsteuerung eingebunden, sodaß über eine solche Regelung auch Wechselwirkungen mit anderen Fahrzeugsystemen, wie z.B. Bremsen oder Lenkung übertragen werden. Eine unkontrollierte Änderung des Betriebsverhaltens einer Luftfeder und Dämpfereinheit, beispielsweise erzeugt durch eine starke Temperaturänderung, ist daher unerwünscht.

Nachdem in der Vergangenheit bei Luftfedersystemen für PKW fast ausschließlich hydraulische Dämpfer eingesetzt wurden, die, wenn auch bei sich ändernden Dämpfungseigenschaften, in entsprechenden Temperaturgrenzbereichen eher unauffällig sind, wird eine Temperaturabhängigkeit von Dämpfungssystemen mit Einsatz der Luftdämpfung durchaus bemerkbar.

Erklärbar wird dies z.B. bei der durch die DE-A-24 06 835 offenbarten gattungsbildenden Federungs- und Dämpfungsvorrichtung, bei der zwei Arbeitsräume, nämlich ein Dämpferraum und ein Federungsraum über Drosselventile miteinander verbunden sind. Beide Arbeitsräume sind mindestens teilweise durch bewegliche Wände in Form von Faltenbälgen oder Rollbälgen begrenzt und können daher unterschiedliche Volumina annehmen. Einem solchen System ist inhärent, dass sich die Dämpfungswirkung /Dämpfungsarbeit mit steigender Last erhöht. Im Gegensatz dazu verändert sich bei z.B. Erhöhung der Last eine normale auf nur eine Laststufe ausgelegte hydraulische Dämpfung gravierend, d.h. deren Dämpfung erniedrigt sich. Anders liegt der Fall bei der durch die OS DE 24 06 835 offenbarten Luftfederungs- und Dämpfungsvorrichtung. Erhöht sich deren Last, so steigt der Gasdruck im Federungsraum und im Dämpfungsraum und führt aufgrund der damit verbundenen Erhöhung der Gasdichte zur Vergrößerung des dynamischen Differenzdrucks an den Drosselventilen. Dies wiederum bewirkt vorteilhaft einen vergrößerten Energieumsatz, d.h.eine erhöhte Dissipation, und damit eine größere Dämpfung, nachteiligerweise allerdings auch eine erhöhte Wärmeentwicklung.

Aufgabe der Erfindung war es daher, eine Luftfeder- und Dämpfereinheit bereitzustellen bei der eine Temperaturerhöhung oder Überhitzung in allen Betriebszuständen beeinflussbar / kontrollierbar ist.

Gelöst wird diese Aufgabe durch die Merkmale des Hauptanspruchs. Weitere vorteilhafte Ausbildungen sind in den Unteransprüchen offenbart.

Dabei weist die Luftfeder- und Dämpfereinheit Mittel zur Bestimmung der Temperatur innerhalb und außerhalb der Luftfeder- und Dämpfereinheit auf und die durchströmbaren Drosselventile sind so ausgebildet, dass ihre Dämpfung abhängig von den bestimmten Temperaturen verstellbar ist. Dadurch lässt sich etwa eine Erwärmung der gesamten Luftfeder- und Dämpfereinheit als "Modul", also eine Erwärmung von Bauteilen und/oder Druckmedium frühzeitig und sicher beeinflussen und regeln. Im einfachsten Fall erfolgt dabei die Ermittlung der Temperaturen über Sensoren an den je nach Fahrzeug und Einbaulage kritischen Stellen der Luftfeder- und Dämpfereinheit.

Eine vorteilhafte Weiterbildung besteht darin, dass die durchströmbare Drosselventile bei einer Überhitzung der Luftfeder- und Dämpfereinheit in ihren Durchströmungsquerschnitten so verstellbar sind, dass die Dämpfung erniedrigt wird. Damit nutzt man bereits vorhandene Stellelemente und benötigt keine separaten oder zuschaltbaren Ventile oder Strömungsquerschnitte. Bei einem solchen Fall der Überhitzung wird dann die Dämpfung reduziert, also der Durchströmungsquerschnitt kontrolliert vergrößert und somit der Wärmeeintrag verringert. Natürlich ist es auch vorstellbar, dass statt der Vergrößerung des Durchströmungsquerschnittes der durchströmbare Drosselventile andere, separate Bypass-Kanäle zugeschaltet werden.

Ähnliche Vorteile ergeben sich, wenn die durchströmbare Drosselventile bei einer Unterkühlung der Luftfeder- und Dämpfereinheit in ihren Durchströmungsquerschnitten so verstellbar sind, dass die Dämpfung erhöht wird. Dadurch wird es möglich, dass bei sehr kalten Umgebungstemperaturen und in einer Startphase des Fahrzeuges durch eine erhöhte Dämpfung und die dadurch erzeugte hohe Reibung innerhalb des strömenden Mediums eine größer Wärmemenge in das System eingetragen wird. Zusätzlich wird durch die einhergehende Reduzierung auch der Federwege das Balgmaterial geschont.

Eine weitere vorteilhafte Weiterbildung besteht darin, dass die Luftfeder- und Dämpfereinheit Temperatursensoren innerhalb der Arbeitsräume aufweist. Hierdurch ist eine besonders direkte Messung der Temperatur unabhängig von der Einbausituation der Luftfeder- und Dämpfereinheit möglich.

Eine weitere vorteilhafte Weiterbildung besteht darin, dass die Luftfeder- und Dämpfereinheit ein Steuergerät mit einer Berechnungseinheit aufweist, durch welche die Temperatur durch Ermittlung der augenblicklichen Fahrzustandsparameter und deren Vergleich innerhalb eines elektronisch gespeicherten Zustandsmodells bestimmt wird. Bei der heute üblichen Verbindung mehrerer Fahrzeugregelsysteme über einen CAN-BUS / CAN-Netzwerk (CAN = Controller Area Network) und der Vielzahl von verfügbaren Fahrzeugparametern sind "vorausschauende" Berechnungen möglich, die frühzeitig und abhängig von der Fahrweise, von den Umgebungsbedingungen, vom Gelände oder von Straßenverhältnissen etc. ein Schätzung der entstehenden Temperaturen im System ermöglichen. Hierbei wird ein so genanntes "Fahrzeugmodell" zugrunde gelegt, also eine "gerechnete" und in Algorithmen fixierte und simulierte Verhaltensweise eines Fahrzeuges oder seiner Baugruppen, die in Form eines Programmes in einem Steuergerät abgelegt ist. Diese Schätzung kann dann durch Messung der Temperatur immer wieder verifiziert werden.

Eine weitere vorteilhafte Weiterbildung besteht darin, dass die Arbeitsräume übereinander angeordnet und durch einen beweglichen rotationssymmetrischen Kolben getrennt sind, wobei die durchströmbare Drosselventile innerhalb des Kolbens angeordnet sind. Dadurch ergibt sich eine besonders raumsparende Anordnung und Bauweise der erfindungsgemäßen Luftfeder- und Dämpfereinheit

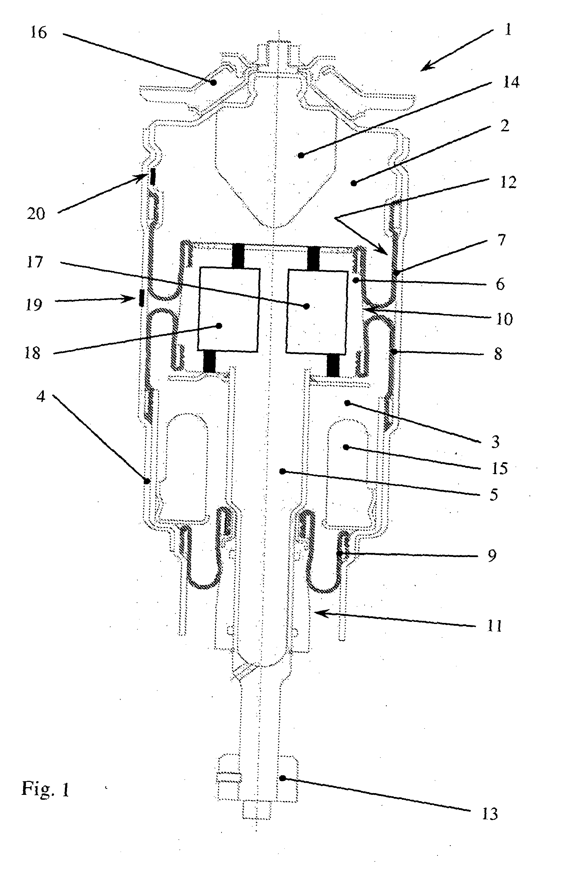

Anhand eines Ausführungsbeispieles soll die Erfindung näher erläutert werden. Die Fig. 1 zeigt als prinzipielle Darstellung hierzu eine erfindungsgemäße Luftfeder- und Dämpfereinheit 1 für ein Fahrwerk eines luftgefederten Personenkraftwagens. Die Luftfeder- und Dämpfereinheit weist zwei mit Druckluft gefüllte Arbeitsräume 2 und 3 auf. Die Druckluft wird über einen hier nicht näher dargestellten Kompressor, über zugehörige Ventile und Leitungen in bekannter Weise in die Arbeitsräume gefördert und kann ebenfalls über dieses System abgelassen werden. Üblicherweise besteht ein Luftfeder- oder Niveauregelsystem aus Druckluftanlage / Druckluftversorgung und vier Luftfedermodulen, nämlich für jedes Rad eines, und wird insgesamt über eine Steuerungseinrichtung geregelt.

Die Arbeitsräume 2 und 3 sind in einem gemeinsamen topfförmigen, hier zylindrische ausgebildeten Gehäuse 4 angeordnet und durch einen am Kopfende einer Kolbenstange 5 befindlichen, rotationssymmetrisch ausgebildeten Kolben 6 getrennt. Der Kolben 6 ist innerhalb des zylindrischen Gehäuses 4 axial beweglich. Innerhalb des Kolbens 6 sind hier die nachfolgend näher dargestellten steuerbaren Drosselventile angeordnet, über die die beiden Arbeitsräume 2 und 3 verbunden sind. Der Kolben 6 und die Kolbenstange 5 werden jeweils durch Rollbälge 7, 8 und 9 innerhalb des zylindrischen Gehäuses abgedichtet und geführt. Die Außenflächen 10 und 11 des Kolbens und der Kolbenstange sowie die Innenfläche 12 des Zylinders sind jeweils über einen für das Abrollen der Rollbälge erforderlichen Bereich als rotationssymmetrische Abrollkonturen ausgebildet.

Ein zwischen dem Ende des zylindrischen Gehäuses und dem unteren Anschlußpunkt 13 zum Fahrwerk befindlicher Faltenbalg zum Schutz gegen Verschmutzungen ist hier nicht näher dargestellt.

Die Luftfeder- und Dämpfereinheit weist weiterhin federnd ausgebildete Anschläge 14 und 15 auf, die bei entsprechender Belastung in der Druck- oder in der Zugstufenendlage den Kolbenweg / Federweg begrenzen, damit kein metallischer Kontakt entsteht. Karosserieseitig ist die Luftfeder- und Dämpfereinheit über ein Federbein-Kopflager 16 mit dem Fahrzeug in bekannter Weise verbunden.

Innerhalb des Kolbens 6 sind für jede Strömungsrichtung die in ihrem Durchströmungsquerschnitt steuerbaren Drosselventile 17 und 18 angeordnet. Bei einer Überhitzung der Luftfeder- und Dämpfereinheit, die durch die Temperatursensoren 19 und 20 detektiert wird und verglichen wird mit der Umgebungstemperatur, die durch einen weiteren im Fahrzueg üblicherweise vorhandenen Temperaturfühler ermittelt wird, werden die Drosselventile 17 und 18 so verstellt, dass deren Durchströmungsquerschnitte vergrößert und somit der Wärmeeintrag und die Dämpfung verringert wird. Der Temperatursensor 20 ist dabei innerhalb des oberen Arbeitsraumes 2 angeordnet.

### Bezugszeichenliste

### (Teil der Beschreibung)

- 1: Luftfeder- und Dämpfereinheit
- 2: Arbeitsraum (Dämpferraum)
- 3: Arbeitsraum (Federraum)
- 4: Zylindrisches Gehäuse
- 5: Kolbenstange
- 6: Kolben
- 7 - 9: Rollbalg
- 10 - 12: Fläche mit Abrollkontur
- 13: Anschlußpunkt
- 14: Federnder Anschlag
- 15: Federnder Anschlag
- 16: Federbein-Kopflager
- 17: steuerbares Drosselventil
- 18: steuerbares Drosselventil
- 19: Temperatursensor
- 20: Temperatursensor

## Patentansprüche

1. Luftfeder- und Dämpfereinheit (1) für Fahrzeuge, wobei die Luftfeder- und Dämpfereinheit mindestens zwei mit Druckluft gefüllte Arbeitsräume (2, 3) aufweist, die jeweils mindestens teilweise durch Rollbälge (7-9) begrenzt werden und die Rollbälge unter Bildung einer Rollfalte mindestens teilweise auf Abrollkonturen (10-12) vorgegebener und als Zylinderflächen ausgebildeter Gehäuseteile (4) abrollen, wobei die Arbeitsräume (2, 3) untereinander über durchströmbare Drosselventile (17, 18) verbunden sind, **dadurch gekennzeichnet, dass** die Luftfeder- und Dämpfereinheit Mittel zur Bestimmung der Temperatur innerhalb und außerhalb der Luftfeder- und Dämpfereinheit aufweist und dass die durchströmbaren Drosselventile (17, 18) so ausgebildet sind, dass ihre Dämpfung abhängig von den bestimmten Temperaturen verstellbar ist.

2. Luftfeder- und Dämpfereinheit nach Anspruch 1, **dadurch gekennzeichnet, dass** die durchströmbaren Drosselventile (17, 18) bei einer Überhitzung der Luftfeder- und Dämpfereinheit in ihren Durchströmungsquerschnitten so verstellbar sind, dass die Dämpfung erniedrigt wird.

3. Luftfeder- und Dämpfereinheit nach Anspruch 1 oder 2, **dadurch gekennzeichnet, dass** die durchströmbaren Drosselventile (17, 18) bei einer Unterkühlung der Luftfeder- und Dämpfereinheit in ihren Durchströmungsquerschnitten so verstellbar sind, dass die Dämpfung erhöht wird.

4. Luftfeder- und Dämpfereinheit nach Anspruch 1 bis 3, **dadurch gekennzeichnet, dass** die Luftfeder- und Dämpfereinheit Temperatursensoren (19, 20) innerhalb der Arbeitsräume (2, 3) aufweist.

5. Luftfeder- und Dämpfereinheit nach Anspruch 1 bis 4, **dadurch gekennzeichnet, dass** die Luftfeder- und Dämpfereinheit ein Steuergerät mit einer Berechnungseinheit aufweist, durch welche die Temperatur durch Ermittlung der augenblicklichen Fahrzustandsparameter und deren Vergleich innerhalb eines elektronisch gespeicherten Zustandsmodells bestimmt wird.

6. Luftfeder- und Dämpfereinheit nach Anspruch 1 bis 5, **dadurch gekennzeichnet, dass** die Arbeitsräume (2, 3) übereinander angeordnet und durch einen beweglichen rotationssymmetrischen Kolben (6) getrennt sind, wobei die durchströmbare Drosselventile (17, 18) innerhalb des Kolbens (6) angeordnet sind.

## Claims

1. Pneumatic-spring and damper unit (1) for vehicles, the pneumatic-spring and damper unit having at least two working spaces (2, 3) which are filled with compressed air and which are in each case delimited at least partially by concertinas (7-9), and the concertinas rolling, thereby forming a rolled fold, at least partially on rolling contours (10, 12) of predetermined housing parts (4) designed as cylinder surfaces, the working spaces (2, 3) being connected to another via throughflow throttle valves (17, 18), **characterized in that** the pneumatic-spring and damper unit has means for determining the temperature inside and outside the pneumatic-spring and damper unit, and **in that** the throughflow throttle valves (17, 18) are designed such that their damping is adjustable as a function of the determined temperatures.

2. Pneumatic-spring and damper unit according to Claim 1, **characterized in that,** in the event of an overheating of the pneumatic-spring and damper unit, the throughflow cross sections of the throughflow throttle valves (17, 18) are adjustable such that damping is lowered.

3. Pneumatic-spring and damper unit according to Claim 1 or 2, **characterized in that**, in the event of an undercooling of the pneumatic-spring and damper unit, the throughflow cross sections of the throughflow throttle valves (17, 18) are adjustable such that damping is raised.

4. Pneumatic-spring and damper unit according to Claims 1 to 3, **characterized in that** the pneumatic-spring and damper unit has temperature sensors (19, 20) inside the working spaces (2, 3).

5. Pneumatic-spring and damper unit according to Claims 1 to 4, **characterized in that** the pneumatic-spring and damper unit has a control apparatus with a computation unit, by means of which the temperature is determined by ascertaining the instantaneous driving-state parameters and comparing these inside an electronically stored state model.

6. Pneumatic-spring and damper unit according to Claims 1 to 5, **characterized in that** the working spaces (2, 3) are arranged one above the other and are separated by a moveable rotationally symmetrical piston (6), the throughflow throttle valves (17, 18) being arranged inside the piston (6).

## Revendications

1. Unité de ressort pneumatique et d'amortisseur (1) pour véhicules automobiles, dans laquelle l'unité de ressort pneumatique et d'amortisseur présente au moins deux chambres de travail (2, 3) remplies d'air comprimé, qui sont chacune limitées au moins en partie par des soufflets roulants (7 - 9), les soufflets roulants s'enroulant en formant un pli roulé au moins en partie sur des contours de roulement (10 - 12) de parties de boîtier (4) prédéterminées et réalisées sous forme de surfaces cylindriques, les chambres de travail (2, 3) étant connectées les unes aux autres par le biais de papillons d'étranglement (17, 18) pouvant être parcourus par l'écoulement, **caractérisée en ce que** l'unité de ressort pneumatique et d'amortisseur présente des moyens pour déterminer la température à l'intérieur et à l'extérieur de l'unité de ressort pneumatique et d'amortisseur, et **en ce que** les papillons d'étranglement (17, 18) pouvant être parcourus par l'écoulement sont réalisés de telle sorte que leur amortissement puisse être réglé en fonction des températures définies.

2. Unité de ressort pneumatique et d'amortisseur selon la revendication 1, **caractérisée en ce que** les papillons d'étranglement (17, 18) pouvant être parcourus par l'écoulement peuvent être réglés en cas de surchauffe de l'unité de ressort pneumatique et d'amortisseur par ajustement de leurs sections transversales d'écoulement de telle sorte que l'amortissement soit réduit.

3. Unité de ressort pneumatique et d'amortisseur selon la revendication 1 ou 2, **caractérisée en ce que** les papillons d'étranglement (17, 18) pouvant être parcourus par l'écoulement peuvent être réglés en cas de sous-refroidissement de l'unité de ressort pneumatique et d'amortisseur par ajustement de leurs sections transversales d'écoulement de telle sorte que l'amortissement soit accru.

4. Unité de ressort pneumatique et d'amortisseur selon l'une quelconque des revendications 1 à 3, **caractérisée en ce que** l'unité de ressort pneumatique et d'amortisseur présente des capteurs de température (19, 20) à l'intérieur des chambres de travail (2, 3).

5. Unité de ressort pneumatique et d'amortisseur selon l'une quelconque des revendications 1 à 4, **caractérisée en ce que** l'unité de ressort pneumatique et d'amortisseur présente un appareil de commande avec une unité de calcul à travers laquelle la température est déterminée par détection des paramètres de situation de conduite instantanés et leur comparaison à l'intérieur d'un modèle de situation mémorisé électroniquement.

6. Unité de ressort pneumatique et d'amortisseur selon l'une quelconque des revendications 1 à 5, **caractérisée en ce que** les chambres de travail (2, 3) sont disposées les unes au-dessus des autres et sont séparées par un piston (6) mobile à symétrie de révolution, les papillons d'étranglement (17, 18) pouvant être parcourus par l'écoulement étant disposés à l'intérieur du piston (6).
